# EUROPÄISCHE PATENTSCHRIFT

(11) **EP 3 788 907 B1**
(45) Veröffentlichungstag und Bekanntmachung des Hinweises auf die Patenterteilung: **11.05.2022**
(21) Anmeldenummer: 20190749.0
(22) Anmeldetag: 12.08.2020
(51) Int. Cl.: A45F 3/04, A45C 5/14, B65D 85/68, A45C 7/00

(54) **TRANSPORTBEHÄLTER FÜR EIN KLAPPFAHRRAD**
TRANSPORT CONTAINER FOR A FOLDING BICYCLE
RÉCEPTACLE DE TRANSPORT POUR UNE BICYCLETTE PLIANTE

(30) Priorität: 03.09.2019 DE 102019123580
(43) Veröffentlichungstag der Anmeldung: 10.03.2021
(73) Patentinhaber: B & W International GmbH, 49479 Ibbenbüren (DE)
(72) Erfinder: HIMPEL, Jannis, 49477 Ibbenbüren (DE); KUCH, Andreas, 49079 Osnabrück (DE); RATERING, Lea, 48493 Wettringen (DE); BUß, Philipp, 48153 Münster (DE); HERZOG, Juri, 49545 Tecklenburg (DE); HAGEMANN, Sebastian, 48477 Hörstel (DE)
(74) Vertreter: Gramm, Lins & Partner Patent- und Rechtsanwälte PartGmbB

(56) Entgegenhaltungen:
- GB-A- 2 552 227
- US-A- 4 180 111
- US-A- 5 913 448
- US-A1- 2001 031 104
- US-A1- 2015 327 639

## Beschreibung

Die Erfindung betrifft einen Transportbehälter für ein Klappfahrrad, wobei der Transportbehälter
- einen Boden und
- wenigstens ein erstes Wandungselement aufweist, das entlang einer Kante des Bodens mit dem Boden verbunden ist,

wobei das erste Wandungselement mittels einer ersten Verbindungseinrichtung an einem Element des Transportbehälters befestigbar ist, so dass ein Innenraum des Transportbehälters ein erstes Volumen aufweist, und
wobei das erste Wandungselement mittels einer zweiten Verbindungseinrichtung an einem Element des Transportbehälters befestigbar ist, so dass der Innenraum des Transportbehälters ein zweites Volumen aufweist,
wobei das erste Volumen größer als das zweite Volumen ist,
wobei der Transportbehälter als Rucksack verwendbar ist, wenn das erste Wandungselement mittels der zweiten Verbindungseinrichtung befestigt ist, wobei bevorzugt der Boden des Transportbehälters derart angeordnet ist, dass er einem Rücken des Trägers des Rucksackes zugewandt ist.

Klappfahrräder sind aus dem Stand der Technik seit Langem bekannt und werden in unterschiedlichen Ausführungsformen verwendet. Sie sind insbesondere dann von Vorteil, wenn das Klappfahrrad beispielsweise von Berufspendlern transportiert werden muss, bevor es eingesetzt wird. Dies betrifft beispielsweise Berufstätige, die beispielsweise mit einem öffentlichen Verkehrsmittel, wie etwa dem Zug oder dem Bus, in die Nähe ihres Arbeitsplatzes fahren und dort auf das mitgebrachte Fahrrad, das ein Klappfahrrad ist, umsteigen.

Unter einem Klappfahrrad werden im Rahmen der vorliegenden Erfindung insbesondere Fahrräder verstanden, die zusammengeklappt, also in ihren Abmessungen verkleinert, werden können. Aber auch andere Transportmittel und Fahrzeuge, die durch Muskelkraft angetrieben und in unterschiedliche Größen und Abmessungen verkleinert und zusammengeklappt werden können, werden vorliegend unter einem Klappfahrrad verstanden.

Um ein derartiges Klappfahrrad in zusammengeklapptem Zustand zu transportieren, ist es aus mehreren Gründen von Vorteil, das Klappfahrrad in einem Transportbehälter zu transportieren. Insbesondere bei schlechtem Wetter und/oder schlechten Verkehrswegen können insbesondere die Räder, aber auch andere Bauteile eines Fahrrades verschmutzt sein. Es ist daher insbesondere für Mitreisende von Vorteil, diese verschmutzten Elemente durch den Transport in einem Transportbehälter abzudecken, sodass Mitreisende oder Teile des Verkehrsmittels, beispielsweise des Busses oder der Bahn, nicht verschmutzt werden. Wird das Klappfahrrad als Gepäckstück transportiert, beispielsweise bei Flugreisen, ist es von Vorteil, das Klappfahrrad in einem Transportbehälter zu transportieren, um Beschädigungen des Klappfahrrades zu verhindern.

Taschen und Transportbehälter, die in unterschiedlichen Anordnungen unterschiedlich große Stauräume bilden, sind beispielsweise aus der GB 2 552 227 A, der US 5 913 448 A, der US 4 180 111 A, der US 2001/031104 A1 und der US 2015/327639 A1 bekannt.

Herkömmliche Transportbehälter für Klappfahrräder verfügen insbesondere über einen starren oder steifen Korpus, der mit einer Klappe oder einer verschließbaren Öffnung ausgebildet ist. Das Klappfahrrad ist in dem Transportbehälter durch die Klappe und/oder die verschließbare Öffnung positionierbar und kann so in dem Transportbehälter transportiert werden.

Nachteilig bei derartigen Transportbehältern ist es jedoch, dass der Transportbehälter selbst auf dem ausgeklappten und zur Funktion vorbereiteten Klappfahrrad nur schwer oder gar nicht transportiert werden kann, da er unhandlich und sperrig ausgebildet ist.

Der Erfindung liegt daher die Aufgabe zugrunde, einen Transportbehälter für ein Klappfahrrad so weiterzuentwickeln, dass einerseits das Klappfahrrad sicher und einfach transportiert werden kann und andererseits der Transportbehälter ohne enthaltenes Klappfahrrad gut transportierbar ist.

Die Erfindung löst die gestellte Aufgabe durch einen Transportbehälter für ein Klappfahrradgemäß dem Oberbegriff des Anspruchs 1, der sich dadurch auszeichnet, dass an dem Boden wenigstens zwei Laschen angeordnet sind, die in eine erste Position, in der sie den Boden auf dessen Außenseite überdecken, und in eine zweite Position bringbar sind.

Ist das erste Wandungselement, das beispielsweise eine Stirnseite des Transportbehälters sein kann, mittels der ersten Verbindungseinrichtung an einem Element des Transportbehälters befestigt, verfügt der Transportbehälter über ein großes Volumen, das bevorzugt so groß ist, dass das Klappfahrrad im zusammengeklappten Zustand in ihm aufgenommen werden kann. Der Transportbehälter befindet sich dann in einem Transportzustand. Das Element, an dem das erste Wandungselement mittels der ersten Verbindungseinrichtung befestigbar ist, ist bevorzugt ein zweites Wandungselement, wobei das erste Wandungselement und das zweite Wandungselement bevorzugt den Innenraum des Transportbehälters vollständig, zumindest nahezu vollständig oder auch wenigstens vierseitig umgeben, so dass die Wandungselemente beispielsweise nur vier Seitenwände bilden und eine Oberseite, also eine dem Boden gegenüberliegende Seite offen ist. Bevorzugt ist der Innenraum des Transportbehälters in diesem Fall geschlossen oder verschließbar. Es ist jedoch auch möglich, dass insbesondere auf der dem Boden gegenüberliegenden Seite des Transportbehälters eine Öffnung vorhanden ist.

Ist das erste Wandungselement mittels der zweiten Verbindungseinrichtung an einem Element des Transportbehälters befestigt, so verfügt der Innenraum über ein zweites, kleineres Volumen. Damit ist auch der Transportbehälter selbst kleiner ausgebildet und er befindet sich in einem Zustand, in dem das Klappfahrrad zu groß ist, um in dem kleinen zweiten Volumen des Innenraums des Transportbehälters aufgenommen zu werden.

Wird ein derartiger Transportbehälter verwendet, wird das Klappfahrrad in den Innenraum des Transportbehälters eingelagert, wobei der Innenraum das erste größere Volumen aufweist und somit das erste Wandungselement mittels der ersten Verbindungseinrichtung an dem Element des Transportbehälters befestigbar oder befestigt ist. Bevorzugt verfügt das Element des Transportbehälters über eine Öffnung, durch die das Klappfahrrad in den Innenraum des Transportbehälters eingebracht werden kann und die verschlossen wird, indem das erste Wandungselement mittels der ersten Verbindungseinrichtung an dem entsprechenden Element des Transportbehälters befestigt wird.

In diesem Zustand kann das Klappfahrrad innerhalb des Transportbehälters transportiert werden. Der Boden, der bevorzugt eine starre Platte, beispielsweise aus einem Kunststoff, Holz oder Metall, aufweist, bietet ausreichend Stabilität, um das Klappfahrrad, beispielsweise im aufgerichteten Zustand, zu transportieren.

Am Zielort angekommen, kann das Klappfahrrad aus dem Innenraum des Transportbehälters entfernt werden. Das erste Wandungselement wird durch Lösen der ersten Verbindungseinrichtung von dem Element des Transportbehälters entfernt oder zumindest die Befestigung wird gelöst. Stattdessen wird das erste Wandungselement nun mittels der zweiten Verbindungseinrichtung an einem Element des Transportbehälters befestigt, sodass der Innenraum und damit auch der Transportbehälter selbst kleiner ausgestaltet sind. In diesem Zustand kann der Transportbehälter leicht auch auf dem Klappfahrrad transportiert werden. In einer bevorzugten Ausgestaltung kann der Transportbehälter an dem Klappfahrrad, beispielsweise an der Lenkerstange oder dem Gepäckträger befestigt werden. Dazu ist es von Vorteil, wenn der Transportbehälter wenigstens ein Befestigungselement aufweist, das eingerichtet ist, mit dem entsprechenden Bauteil des Klappfahrrades verbunden zu werden.

Erfindungsgemäß ist der Transportbehälter als Rucksack verwendbar, wenn das erste Wandelement mittels der zweiten Verbindungseinrichtung befestigt ist, wobei bevorzugt der Boden des Transportbehälters derart angeordnet ist, dass er einem Rücken des Trägers des Rucksackes zugewandt ist. In diesem Zustand lässt sich der Transportbehälter nicht nur leicht transportieren, sondern er erfüllt zusätzlich eine weitere Funktion, indem andere Gepäckstücke, beispielsweise eine Jacke oder eine Tasche, in dem als Rucksack verwendbaren Transportbehälter transportiert werden können. Alternativ oder zusätzlich dazu verfügt der Transportbehälter über wenigstens ein Befestigungselement zum Befestigen des Transportbehälters an einem Bauteil des Klappfahrrades, beispielsweise an einer Lenkerstange oder an einem Gepäckträger.

Vorzugsweise ist die erste Verbindungseinrichtung und/oder die zweite Verbindungseinrichtung eine formschlüssige Verbindungseinrichtung. Besonders bevorzugt sind beide Verbindungseinrichtungen Formschlusseinrichtungen. Dabei kann die erste Verbindungseinrichtung und/oder die zweite Verbindungseinrichtung wenigstens einen Reißverschluss oder wenigstens ein Klettverschluss aufweisen. Auch Druccknöpfe, Rastelemente oder sonstige Formschlusseinrichtungen sind möglich. Insbesondere bei der Verwendung von Reißverschlüssen oder Klettverschlüssen ist eine besonders leichte Lösbarkeit der jeweiligen Verbindungseinrichtung gegeben, sodass das erste Wandungselement besonders einfach von einem Zustand, in dem es mittels der ersten Verbindungseinrichtung befestigt ist, in einen Zustand überführt werden kann, in dem es mittels der zweiten Verbindungseinrichtung befestigt ist.

Unabhängig davon ist das erste Wandungselement entlang einer Kante des Bodens mit diesem Boden verbunden. Dies kann beispielsweise über Scharniere, insbesondere über Filmscharniere, oder über flexible und/oder elastische Stoffbahnen geschehen.

Vorzugsweise ist ein Formschlusselement der ersten Verbindungseinrichtung auch ein Formschlusselement der zweiten Verbindungseinrichtung, wobei dieses Formschlusselement bevorzugt an dem ersten Wandungselement angeordnet ist. Handelt es sich bei den beiden Verbindungseinrichtungen beispielsweise um Reißverschlüsse, ist eines der Reißverschlusselemente am ersten Wandungselement und das andere der jeweiligen Reißverschlüsse ... Reißverschlusselement am jeweils anderen Element angeordnet. Sind diese an den jeweiligen Elementen angeordneten Formschlusselemente, also Reißverschlussteile, so ausgebildet, dass die Länge, der Abstand und die Form der einzelnen Zähne des Reißverschlusses identisch oder zumindest nahezu identisch ausgebildet sind, können sie beide mit dem gleichen Reißverschlusselement, das in diesem Fall am ersten Wandungselement angeordnet ist, in formschlüssige Verbindung treten. Auch bei Klettverschlusselementen ist diese besonders einfache Form möglich. Ein Klettverschlusselement, das am ersten Wandungselement angeordnet ist, kann mit Klettverschlussgegenelementen an unterschiedlichen Elementen und Bauteilen des Transportbehälters in Kontakt treten und so die erste Verbindungseinrichtung oder die zweite Verbindungseinrichtung bilden.

Erfindungsgemäß sind an dem Boden wenigstens zwei Laschen angeordnet, die in eine erste Position, in der sie den Boden, vorzugsweise auf dessen Außenseite, überdecken, und in eine zweite Position bringbar sind, wobei bevorzugt Schultergurte von außen zugänglich sind, wenn die wenigstens zwei Laschen sich in der zweiten Position befinden. Diese Ausgestaltung hat mehrere Vorteile. Soll der Transportbehälter zum Transport des Klappfahrrades verwendet werden, befinden sich wenigstens zwei Laschen vorzugsweise in der ersten Position. Sie überdecken dann, bevorzugt vollständig, eine Außenseite des Bodens, die die Seite ist, die der Außenwelt zugewandt und dem Innenraum des Transportbehälters abgewandt ist. Sie ist folglich die Seite, die beispielsweise beim Transport des Transportbehälters verschmutzen kann.

Soll hingegen der Transportbehälter beispielsweise als Rucksack verwendet werden, wobei bevorzugt der Boden am Rücken des Trägers angeordnet wird, ist es von Vorteil, die Laschen in die zweite Position zu bringen. Dadurch wird einerseits die gegebenenfalls verschmutzte Seite der Laschen so angeordnet, dass sie nicht mit den gegebenenfalls empfindlichen Kleidungsstücken des Trägers in Kontakt kommt. Vielmehr wird eine frische, also unverschmutzte, Außenseite des Bodens mit dem Rücken des Trägers und damit auch mit der Kleidung des Trägers in Kontakt gebracht.

Zudem befinden sich vorzugsweise zwischen der Außenseite des Bodens, die von den Laschen abgedeckt werden kann, und den Laschen selbst, die Schultergurte, die für den Transportbehälter notwendig sind, um ihn als Rucksack verwenden zu können. Die Positionierung der Schultergurte an dieser Stelle hat den Vorteil, dass sie einerseits verfügbar sind, wenn sie gebraucht werden, und andererseits nicht zugänglich sind und damit nicht stören und zu Problemen führen können, wenn sie nicht gebraucht werden.

Vorzugsweise befindet sich an den wenigstens zwei Laschen wenigstens ein Formschlusselement, bevorzugt jedoch jeweils wenigstens ein Formschlusselement der zweiten Verbindungseinrichtung. Es hat sich als vorteilhaft herausgestellt, wenn die wenigstens zwei Laschen entlang von Kanten des Bodens an diesem angeordnet sind, die einen vorzugsweise rechten Winkel mit der Kante des Bodens bilden, mit der das erste Wandungselement verbunden ist. Die Laschen können dann um diese Kante herum verschwenkt werden, wenn sie aus der ersten Position in die zweite Position gebracht werden. Vorzugsweise schließen sie dann mit dem Boden einen rechten Winkel oder zumindest nahezu rechten Winkel ein, sodass ihre vor Schmutz geschützte Seite, die dem Boden des Transportbehälters zugewandt ist, wenn sie sich in der ersten Position befinden, nun auf der Außenseite des Transportbehälters angeordnet werden. Befindet sich an dieser Stelle wenigstens ein Formschlusselement der zweiten Verbindungseinrichtung, kann das erste Wandungselement nun mit seinem Formschlusselement an diesem Formschlusselement befestigt werden, wobei die beiden Formschlusselemente eine zweite Verbindungseinrichtung bilden. Durch diese Verbindung ist gewährleistet, dass die Formschlusselemente der zweiten Verbindungseinrichtung, die sich an den Laschen befinden, vor Verschmutzungen und Beschädigungen während der Benutzung des Transportbehälters als Transportbehälter für ein Klappfahrrad geschützt sind.

Bevorzugt ist das erste Wandungselement mittels der ersten Verbindungseinrichtung an einem zweiten Wandungselement befestigbar, wobei vorzugsweise zwischen dem ersten Wandungselement und dem zweiten Wandungselement eine Ladeöffnung liegt, durch die das erste Volumen zugänglich ist, wenn das erste Wandungselement weder mittels der ersten Verbindungseinrichtung noch mittels der zweiten Verbindungeinrichtung an einem weiteren Element des Transportbehälters befestigt ist. In diesem Zustand ist das erste Wandungselement bevorzugt lediglich an der Kante des Bodens angeordnet. Es kann vorzugsweise um diese Kante verschwenkt werden, wodurch die Ladeöffnung voll geöffnet wird und bevorzugt den gesamten Querschnitt des Innenraums des Transportbehälters freigibt. Auf diese Weise lässt sich das Klappfahrrad auf besonders einfache Weise in den Innenraum des Transportbehälters bringen. Wird danach das erste Wandungselement mittels der ersten Verbindungseinrichtung an dem zweiten Wandungselement befestigt, ist der Innenraum bevorzugt vollständig geschlossen und das Klappfahrrad im Inneren des Innenraums des Transportbehälters vor Beschädigungen und Verschmutzungen geschützt.

Bevorzugt verfügt der Boden über eine Kunststoffplatte, die vorzugsweise eine Mehrzahl von Durchbrüchen und/oder Hohlkammern, bevorzugt kreisförmige, ovale oder polygonale, besonders bevorzugt hexagonale Durchbrüche und/oder Hohlkammern oder quadratische Durchbrüche und/oder Hohlkammern aufweist und weiter besonders bevorzugt eine Wabenstruktur aufweist. Dadurch wird einerseits eine ausreichende Stabilität für den Boden des Transportbehälters und gegebenenfalls die Rückenplatte des Rucksackes erreicht und andererseits Gewicht gespart, sodass der Transportbehälter leicht ausgebildet ist. Zudem wird ein in dem Transportbehälter aufgenommenes Klappfahrrad gegen von außen einwirkende Kräfte, insbesondere seitliche Kräfte geschützt.

Der Transportbehälter verfügt bevorzugt über wenigstens zwei Rollen, die besonders bevorzugt an den Enden der Kante angeordnet sind, an denen das erste Wandungselement am Boden des Transportbehälters positioniert ist. An der gegenüberliegenden Kante oder Seite des Transportbehälters befindet sich bevorzugt ein Griffelement, beispielsweise eine Lasche oder Schlaufe. Befindet sich im Transportbehälter ein Klappfahrrad, kann der Transportbehälter an diesem Griffelement angehoben werden, sodass der einzige Kontakt des Transportbehälters zum Boden über die Rollen erreicht wird, sodass der Transportbehälter leicht gezogen und mit den Rollen bewegt werden kann.

Vorzugsweise ist das erste Volumen des Innenraumes des Transportbehälters so ausgebildet, dass zusätzlich zu dem Klappfahrrad wenigstens ein weiteres Gepäckstück, insbesondere ein Kleidungsbeutel, in dem Innenraum aufgenommen werden kann. In diesen Kleidungsbeutel können beispielsweise Kleidungsstücke transportiert werden, die am Zielort benötigt werden. Besonders bevorzugt ist der Kleidungsbeutel innerhalb des Innenraumes des Transportbehälters so relativ zum Klappfahrrad positioniert war, dass empfindliche Bauelemente des Klappfahrrades gepolstert und so beispielsweise gegen Stöße von außen geschützt werden. Der Kleidungsbeutel besteht dazu vorzugsweise aus einem widerstandsfähigen, insbesondere wasserfesten Material, um die in dem Kleidungsbeutel enthaltenen Kleidungsstücke vor Verschmutzungen und Beschädigungen, die durch das Klappfahrrad hervorgerufen werden können, zu schützen.

Vorzugsweise kann der Kleidungsbeutel auch in dem Innenraum des Transportbehälters positioniert werden, wenn dieser das zweite Volumen aufweist, also das erste Wandlungselement mittels der zweiten Verbindungseinrichtung an einem Element des Transportbehälters befestigt ist. Dies ist insbesondere dann von Vorteil, wenn der Transportbehälter als Rucksack verwendet wird. Der Kleidungsbeutel dient dann als Innentasche oder Innenbehälter für den Transportbehälter und kann auch im befüllten Zustand einfach transportiert werden. Ist der Kleidungsbeutel hingegen leer, sorgt er in dieser Positionierung für einen wasserfesten, widerstandsfähigen Aufnahmeraum innerhalb des Innenraums des Transportbehälters.

Vorzugsweise verfügt der Kleidungsbeutel über wenigstens einen Gurt, sodass er auch als Rucksack oder Sportbeutel verwendet werden kann. Er ist bevorzugt in der Größe variierbar, indem beispielsweise ein Teil des Kleidungsbeutel nach innen umgeschlagen werden kann. Auf diese Weise halbiert sich das Volumen des Kleidungsbeutels da die Außenwandung doppelt gelegt wird.

Mithilfe der beiliegenden Figuren wird nachfolgend ein Ausführungsbeispiel der vorliegenden Erfindung näher erläutert. Es zeigt
- Figur 1 -: eine Seitenansicht eines Transportbehälters,
- Figur 2 -: eine Ansicht des Transportbehälters von unten,
- Figur 3 -: eine Ansicht von unten mit aufgeklappten Laschen und
- Figur 4 -: die Darstellung des Transportbehälters im zweiten Zustand.

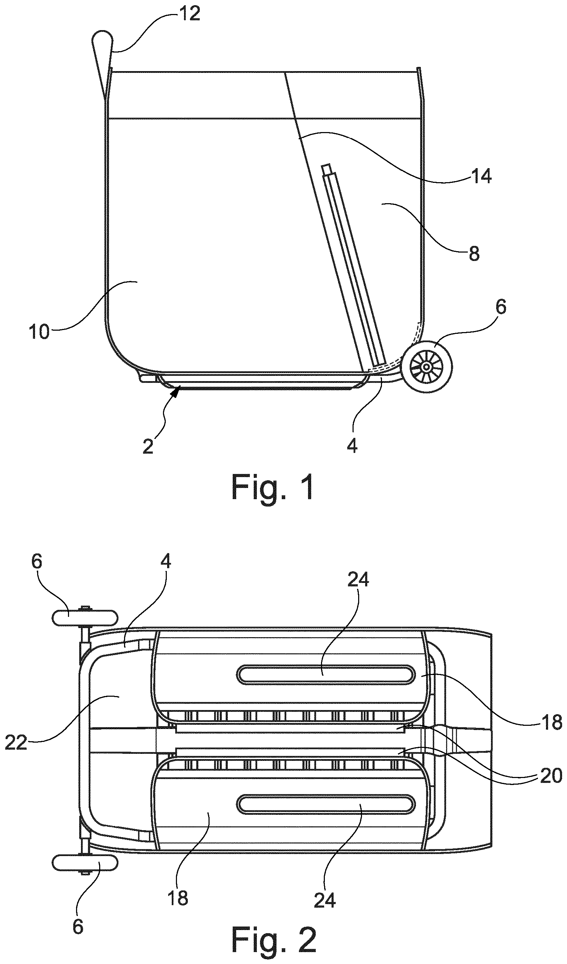

Figur 1 zeigt einen Transportbehälter gemäß einem ersten Ausführungsbeispiel der vorliegenden Erfindung. Er verfügt über einen Boden 2, der über einen Rahmen 4 verfügt, der dem Boden 2 die nötige Stabilität verleiht. Am Rahmen 4 befinden sich zwei Räder 6, mittels derer der Transportbehälter bewegt werden kann. Oberhalb des Bodens 2 befindet sich ein erstes Wandungselement 8 und ein zweites Wandungselement 10, die gemeinsam mit dem Boden 2 einen Innenraum des Transportbehälters vollständig umgeben. Am zweiten Wandungselement 10 befindet sich eine Zugöse 12. An ihr kann der Transportbehälter angehoben werden, bis der einzige Kontakt des Transportbehälters mit dem Fußboden durch die Räder 6 gegeben ist. In diesem Zustand kann der Transportbehälter leicht bewegt werden.

Das erste Wandungselement 8 ist an dem zweiten Wandungselement 10 mittels einer nur schematisch dargestellten ersten Verbindungseinrichtung 14 befestigt, die im gezeigten Ausführungsbeispiel als Reißverschluss ausgebildet ist. In diesem Zustand verfügt der Innenraum des Transportbehälters über das erste Volumen, das groß genug ist, um ein Klappfahrrad aufzunehmen. Dazu wird im gezeigten Ausführungsbeispiel die erste Verbindungseinrichtung 14 gelöst, sodass das erste Wandungselement 8, dass entlang einer Kante mit dem Boden 2 verbunden ist, relativ zum Boden 2 um die Kante herum verschwenkt werden kann. Dabei entsteht eine Öffnung, durch die ein Klappfahrrad in das zweite Wandungselement 10 hineingeschoben werden kann. Anschließend wird die Verwendung über das erste Verbindungselement 14 wiederhergestellt und der Transportbehälter geschlossen.

Figur 2 zeigt eine Ansicht des Transportbehälters aus Figur 1 von unten. Man erkennt den Rahmen 4 des Bodens 2 und die beiden Räder 6. Am Boden 2 befinden sich 2 Laschen 18, die beispielsweise durch Klettverschlusselemente 20 an einer Kunststoffplatte 22 befestigt sind. Die Kunststoffplatte 22 ist mit dem Rahmen 4 Teil des Bodens und sorgt für eine ausreichende Stabilität. An den beiden Laschen 18 befinden sich Schutzstreifen 24, die in der in Figur 1 gezeigten Position des Transportbehälters mit dem Fußboden in Kontakt kommen und die Unterseite des Bodens 2 des Transportbehälters schützen sollen.

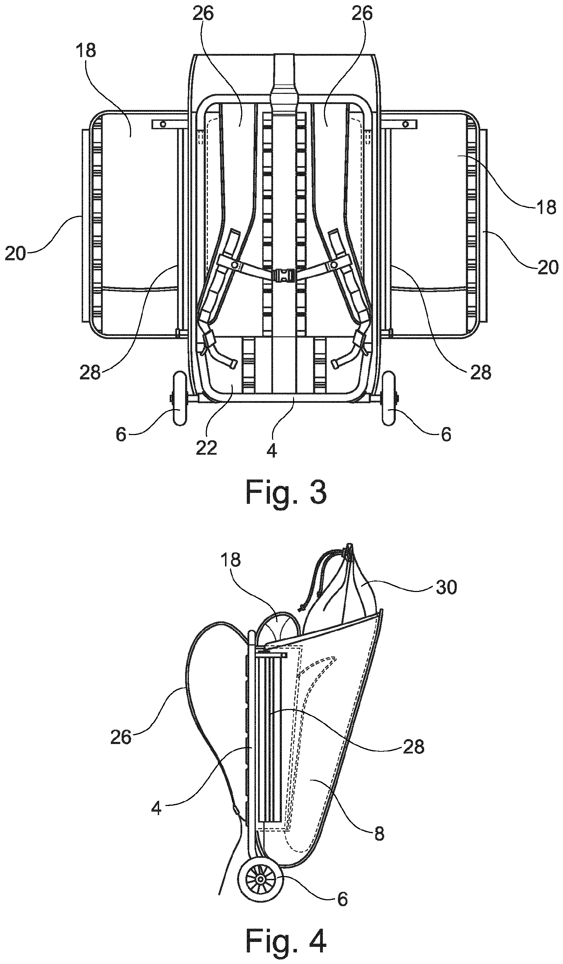

Figur 3 zeigt die Darstellung aus Figur 2 um 90° gedreht mit geöffneten Laschen 18. Die Klettverschlusselemente 20 wurden gelöst und die Laschen 18 aufgeklappt. Die Räder 6, der Rahmen 4 und die Kunststoffplatte 22 bilden weiterhin den Boden 2. Durch das Aufklappen der Laschen 18 werden zwei Schultergurte 26 von außen zugänglich. In der Darstellung in Figur 2 sind sie zwischen den Laschen 18 und der Kunststoffplatte 22 angeordnet und daher nicht sichtbar. Durch diese Schultergurte 26 kann der Transportbehälter als Rucksack verwendet werden.

An den aufgeklappten Laschen 18 sind Teile der zweiten Verbindungseinrichtung 28 zu erkennen. Es handelt sich um ein Reißverschlussteil, das mit einem Teil des Reißverschlusses zusammenwirken kann, der die erste Verbindungseinrichtung 14 bildet.

Figur 4 zeigt den Transportbehälter in einer Seitenansicht, wie er als Rucksack verwendbar ist. Der Rahmen 4 des Bodens 2 ist dem Rücken eines nicht dargestellten Benutzers zugewandt. Die Schultergurte 26 sind vom Boden 2 soweit gelöst worden, dass sie nur noch am oberen und unteren Ende mit ihm verbunden sind und somit als Schultergurte 26 verwendbar sind. Die Räder 6 befinden sich am unteren Ende des Bodens 2. Vom ersten Wandungselement 8 ist ein Teil nach innen umgeschlagen, sodass das erste Wandungselement 8 an den Laschen 18 über die zweite Verbindungseinrichtung 28 befestigt ist. Auf diese Weise ist der Innenraum des Transportbehälters kleiner geworden und beinhaltet nun nur noch das zweite Volumen.

In diesem Innenraum befindet sich in Figur 4 ein Kleidungsbeutel 30. Dieser kann wasserdicht und aus strapazierfähigem Material ausgebildet sein und bildet so eine Innentasche oder einen Innenbehälter, in dem das zu transportierenden Gut sicher aufbewahrt wird. Dies ist insbesondere bei kleinen zu transportierenden Gegenständen von Vorteil, da zwischen Einzelteilen des Transportbehälters, beispielsweise den Boden 2, den ersten Wandungselement 8 und den Laschen 18 kleine Lücken und Spalte vorhanden sein können, durch die kleine Gegenstände verloren gehen könnten. Dies wird durch den Kleidungsbeutel 30 sicher vermieden.

### Bezugszeichenliste

- 2: Boden
- 4: Rahmen
- 6: Rad
- 8: erstes Wandungselement
- 10: zweites Wandungselement
- 12: Zugöse
- 14: erste Verbindungseinrichtung
- 18: Lasche
- 20: Klettverschlusselemente
- 22: Kunststoffplatte
- 24: Schutzstreifen
- 26: Schultergurt
- 28: zweite Verbindungseinrichtung
- 30: Kleidungsbeutel

## Patentansprüche

1. Transportbehälter für ein Klappfahrrad, wobei der Transportbehälter
- einen Boden (2) und
- wenigstens ein erstes Wandungselement (8) aufweist, das entlang einer Kante (16) des Bodens mit dem Boden verbunden ist,
wobei das erste Wandungselement mittels einer ersten Verbindungseinrichtung (14) an einem Element des Transportbehälters befestigbar ist, so dass ein Innenraum des Transportbehälters ein erstes Volumen aufweist, und
wobei das erste Wandungselement mittels einer zweiten Verbindungseinrichtung (28) an einem Element des Transportbehälters befestigbar ist, so dass der Innenraum des Transportbehälters ein zweites Volumen aufweist,
wobei das erste Volumen größer als das zweite Volumen ist,
wobei der Transportbehälter als Rucksack verwendbar ist, wenn das erste Wandungselement mittels der zweiten Verbindungseinrichtung befestigt ist, wobei
bevorzugt der Boden des Transportbehälters derart angeordnet ist, dass er einem Rücken des Trägers des Rucksackes zugewandt ist,
wobei an dem Boden wenigstens zwei Laschen (18) angeordnet sind, die in eine erste Position, in der sie den Boden auf dessen Außenseite überdecken, und in eine zweite Position bringbar sind.

2. Transportbehälter nach Anspruch 1, **dadurch gekennzeichnet, dass** die erste Verbindungseinrichtung und/oder die zweite Verbindungseinrichtung eine formschlüssige Verbindungseinrichtung, insbesondere wenigstens ein Reißverschluss und/oder wenigstens ein Klettverschluss, ist.

3. Transportbehälter nach Anspruch 2, **dadurch gekennzeichnet, dass** ein Formschlusselement der ersten Verbindungseinrichtung auch ein Formschlusselement der zweiten Verbindungseinrichtung ist, wobei dieses Formschlusselement bevorzugt an dem ersten Wandungselement angeordnet ist.

4. Transportbehälter nach einem der vorstehenden Ansprüche, **dadurch gekennzeichnet, dass** die Schultergurte von außen zugänglich sind, wenn die wenigstens zwei Laschen sich in der zweiten Position befinden.

5. Transportbehälter nach Anspruch 4, **dadurch gekennzeichnet, dass** sich an den wenigstens zwei Laschen wenigstens eine Formschlusselement, bevorzugt jeweils wenigstens ein Formschlusselement der zweiten Verbindungseinrichtung befindet.

6. Transportbehälter nach einem der vorstehenden Ansprüche, **dadurch gekennzeichnet, dass** das erste Wandungselement mittels der ersten Verbindungseinrichtung an einem zweiten Wandungselement befestigbar ist und zwischen dem ersten Wandungselement und dem zweiten Wandungselement eine Ladeöffnung liegt, durch die das erste Volumen zugänglich ist, wenn das erste Wandungselement weder mittels der ersten Verbindungseinrichtung noch mittels der zweiten Verbindungseinrichtung an einem weiteren Element des Transportbehälters befestigt ist.

7. Transportbehälter nach einem der vorstehenden Ansprüche, **dadurch gekennzeichnet, dass** der Boden eine Kunststoffplatte aufweist, die bevorzugt eine Mehrzahl von Durchbrüchen und/oder Hohlkammern, bevorzugt polygonale, besonders bevorzugt hexagonale Durchbrüche und/oder Hohlkammern, aufweist und weiter besonders bevorzugt eine Wabenstruktur aufweist.

## Claims

1. A transport case for a folding bicycle, wherein the transport case comprises
- a base (2) and
- at least a first wall element (8) that is connected to the base along an edge (16) of said base,
wherein the first wall element can be fixed to an element of the transport case by means of a first connection device (14), so that an interior of the transport case has a first volume, and
wherein the first wall element can be fixed to an element of the transport case by means of a second connection device (28), so that the interior of the transport case has a second volume,
wherein the first volume is greater than the second volume,
wherein the transport case can be used as a rucksack when the first wall element is fixed by means of the second connection device wherein the base of the transport case is preferably arranged in such a way that it faces a back of the wearer of the rucksack,
wherein at least two tabs are arranged on the base wherein said tabs can be brought into a first position, in which they cover the base on its outer side, and into a second position.

2. The transport case according to claim 1, **characterized by** the fact that the first connection device and/or the second connection device is a positive-locking connection device, especially at least one zip and/or at least one velcro fastener.

3. The transport case according to claim 2, **characterized by** the fact that a positive-locking element of the first connection device is also a positive-locking element of the second connection device, wherein this positive-locking element is preferably arranged on the first wall element.

4. The transport case according to one of the preceding claims, **characterized by** the fact that the shoulder straps can be accessed from outside when the at least two tabs are in the second position.

5. The transport case according to claim 4, **characterized by** the fact that at least one positive-locking element of the second connection device, is located on the at least two tabs, preferably on each of the at least two tabs.

6. The transport case according to one of the preceding claims, **characterized by** the fact that the first wall element can be fixed to a second wall element by means of the first connection device and a loading opening is situated between the first wall element and the second wall element through which the first volume can be accessed when the first wall element is fixed neither by means of the first connection device nor the second connection device to another element of the transport case.

7. The transport case according to one of the preceding claims, **characterized by** the fact that the base comprises a plastic board, which preferably features a plurality of openings and/or hollow chambers, preferably polygonal, especially preferably hexagonal openings and/or hollow chambers; it is especially preferable if it has a honeycomb structure.

## Revendications

1. Réceptacle de transport pour une bicyclette pliante, le réceptacle de transport comprenant
- un fond (2) et
- au moins un premier élément de paroi (8) qui est relié au fond le long d'un bord (16) du fond,
le premier élément de paroi pouvant être fixé à un élément du réceptacle de transport au moyen d'un premier dispositif de liaison (14), de sorte qu'un espace intérieur du réceptacle de transport présente un premier volume, et
le premier élément de paroi pouvant être fixé à un élément du réceptacle de transport au moyen d'un deuxième dispositif de liaison (28), de sorte que l'espace intérieur du réceptacle de transport présente un deuxième volume,
le premier volume étant plus grand que le deuxième volume,
le réceptacle de transport pouvant être utilisé comme un sac à dos lorsque le premier élément de paroi est fixé au moyen du deuxième dispositif de liaison, de préférence le fond du réceptacle de transport étant disposé de manière à être tourné vers le dos d'un porteur du sac à dos,
au moins deux languettes (18) étant disposées sur le fond, qui peuvent être amenées dans une première position dans laquelle elles recouvrent le fond sur sa face extérieure, et dans une deuxième position.

2. Réceptacle de transport selon la revendication 1, **caractérisé en ce que** le premier dispositif de liaison et/ou le deuxième dispositif de liaison est un dispositif de liaison par coopération de forme, en particulier au moins une fermeture à glissière et/ou au moins une fermeture Velcro.

3. Réceptacle de transport selon la revendication 2, **caractérisé en ce qu'**un élément de coopération de forme du premier dispositif de liaison est également un élément de coopération de forme du deuxième dispositif de liaison, cet élément de coopération de forme étant de préférence disposé sur le premier élément de paroi.

4. Réceptacle de transport selon l'une des revendications précédentes, **caractérisé en ce que** les sangles d'épaule sont accessibles de l'extérieur lorsque lesdites au moins deux languettes se trouvent dans la deuxième position.

5. Réceptacle de transport selon la revendication 4, **caractérisé en ce qu'**au moins un élément de coopération de forme, de préférence au moins un élément de coopération de forme respectif du deuxième dispositif de liaison, se trouve sur lesdites au moins deux languettes.

6. Réceptacle de transport selon l'une des revendications précédentes, **caractérisé en ce que** le premier élément de paroi peut être fixé à un deuxième élément de paroi au moyen du premier dispositif de liaison, et entre le premier élément de paroi et le deuxième élément de paroi se trouve une ouverture de chargement à travers laquelle le premier volume est accessible lorsque le premier élément de paroi n'est fixé à un autre élément du réceptacle de transport ni au moyen du premier dispositif de liaison ni au moyen du deuxième dispositif de liaison.

7. Réceptacle de transport selon l'une des revendications précédentes, **caractérisé en ce que** le fond comporte une plaque en matière plastique qui présente de préférence une pluralité de traversées et/ou de chambres creuses, de préférence polygonales, de manière particulièrement préférée des traversées et/ou des chambres creuses hexagonales, et de manière tout particulièrement préférée une structure en nid d'abeilles.
